# EUROPEAN PATENT SPECIFICATION

(11) **EP 2 130 731 B1**
(45) Date of publication and mention of the grant of the patent: **29.07.2015**
(21) Application number: 09251442.1
(22) Date of filing: 29.05.2009
(51) Int. Cl.: B60T 8/36, B62L 3/00, B62K 19/38

(54) **Two-wheeled vehicle**
Zweirad-Fahrzeug
Véhicule à deux roues

(30) Priority: 06.06.2008 JP 2008148895
(43) Date of publication of application: 09.12.2009
(73) Proprietor: Yamaha Hatsudoki Kabushiki Kaisha, Iwata-shi, Shizuoka 438-8501 (JP)
(72) Inventor: Tanaka, Toru, Iwata-shi Shizuoka-ken 438-8501 (JP)
(74) Representative: Moreland, David

(56) References cited:
- EP-A1- 1 803 637
- JP-A- H04 133 892
- JP-A- 2007 008 375
- JP-A- 2007 153 282
- US-A- 4 702 339

## Description

### FIELD OF THE INVENTION

The present invention relates to a vehicle, and more particularly, to a vehicle having a brake control apparatus and a rear arm.

### BACKGROUND TO THE INVENTION

Motorcycles are known having a brake control apparatus such as an ABS (Antilock Brake System) and a rear arm. For example, JP-A-2007-008375 discloses a motorcycle including a rear wheel, a vehicle body, a pair of rear arms which are connected to the vehicle body and the rear wheel and which are provided on both sides of the vehicle in its vehicle width direction, a pivot shaft which horizontally supports the rear arms, and a hydraulic unit (brake control apparatus) of an ABS disposed between the vehicle body and the rear wheel. The hydraulic unit of the ABS of the motorcycle is disposed above the pivot shaft and thereby disposed above the rear arms which are horizontally supported by the pivot shaft.

According to the motorcycle (vehicle) disclosed in JP-A-2007-008375, however, there is inconvenience that the center of gravity of the vehicle exists at a high location since the heavy hydraulic unit of the ABS is disposed above the rear arms. Thus, there is a problem that operability of the vehicle is deteriorated.

Another motorcycle is disclosed in US4702339. This motorcycle has a rear fork with a rear wheel pivotally mounted on a rear end thereof. The rear fork is coupled to a portion of the frame of the motorcycle that is located immediately behind the engine via a pivot shaft. An anti-lock controlling unit for controlling the hydraulic pressure provided to the rear brake is provided on the rear fork in the vicinity of the pivot shaft. In particular, the anti-lock control unit is mounted on the rear fork so that its casing is secured via a bracket to a cross member coupling between the two fork legs such that the anti-lock control unit is disposed between the fork legs.

EP1803637 describes a motorcycle that comprises an engine mounted on a body frame, a rear wheel supported on the end of a rear arm which is in turn rockingly supported on a centre frame by a pivot shaft. A brake control unit of an ABS system is arranged in a space below the pivot shaft and close to an outer side of the vehicle body. The height of the brake control unit of the vehicle of EP1803637 should be set to a height that prevents the ABS unit from interfering with a front end portion of the swing arm, even when the front end portion is rocked around the pivot shaft.

### SUMMARY OF THE INVENTION

Various aspects of the present invention are defined in the independent claim. Some preferred features are defined in the dependent claims.

Described herein by way of example is a vehicle comprising:
an engine;
a rear wheel which is rotated by a drive force from the engine;
a rear arm which is disposed behind the engine for rotatably supporting the rear wheel; and
a brake control apparatus configured to control a braking force applied to the rear wheel and prevent the rear wheel from being locked, at least a portion of the brake control apparatus being disposed such as to overlap with the rear arm in a vertical direction of the vehicle.

It will be understood that the vertical direction of the vehicle generally relates to a direction from a lower region of the vehicle to an upper region, and is not dependent on the inclination of the vehicle relative to a surface.

The vehicle further comprises a body frame and a suspension system disposed between the body frame and the rear arm. The brake control apparatus is disposed below the suspension system. At least a portion of the brake control apparatus is disposed such as to overlap with the suspension system in a width direction of the vehicle.

The vehicle comprises a pair of rear arms. The rear arms are provided side by side in a vehicle width direction. The brake control apparatus is disposed between the pair of rear arms.

The brake control apparatus may be disposed such that a center thereof in a vehicle width direction is substantially aligned with a center of the vehicle in the vehicle width direction.

The vehicle may comprise a bracket which is connected to the rear arm and disposed such as to extend in a vertical direction, wherein the brake control apparatus is mounted on the bracket.

The brake control apparatus may be mounted on the body frame through a first and second housing. The first housing may support the brake control apparatus from below. The second housing may support the first housing from below.

The first housing and the second housing may be disposed at a predetermined distance from each other through a fixing member. The fixing member may comprise an elastic member.

The second housing may include a bottom surface which inclines downward from a rear side of the vehicle toward a front side of the vehicle. The bottom surface may comprise a hole formed on a front surface of the vehicle.

The vehicle may further comprise a chamber connected to the engine through an exhaust pipe to reduce exhaust sound. The brake control apparatus may be disposed above the chamber, and may be disposed such as to overlap with the chamber in a width direction of the vehicle.

A center of gravity of the brake control apparatus may be located lower than a center of gravity of the vehicle.

According to a vehicle of the present invention, as described above, since the brake control apparatus is disposed such that at least a portion thereof is disposed such as to overlap with the rear arm as viewed from side, a center of gravity of the vehicle may be located lower than that when the brake control apparatus is disposed above the rear arm. This enables a driver to correct the inclination of the vehicle when the vehicle is inclined, making it possible to prevent the operability of the vehicle from being deteriorated.

### BRIEF DESCRIPTION OF THE DRAWINGS

These and other aspects of the present invention will now be described, by way of example only, with reference to the accompanying drawings, in which:
Fig. 1 is a side view showing the entire structure of a motorcycle according to an embodiment of the present invention;
Fig. 2 is a side view of peripheries of a rear arm of the motorcycle according to the embodiment shown in Fig. 1 as viewed from one side (from the X1 direction in Fig. 9);
Fig. 3 is a perspective view of peripheries of the rear arm of the motorcycle according to the embodiment shown in Fig. 1;
Fig. 4 is a perspective view of peripheries of an ABS unit of the motorcycle according to the embodiment shown in Fig. 1;
Fig. 5 is an exploded perspective view of the ABS unit, an upper housing and a lower housing of the motorcycle according to the embodiment shown in Fig. 1;
Fig. 6 is an exploded perspective view of a screw member used for a connection between the upper housing and the lower housing of the motorcycle according to the embodiment shown in Fig. 1;
Fig. 7 is a side view of peripheries of the ABS unit of the motorcycle according to the embodiment shown in Fig. 1 as viewed from one side (from the X1 direction in Fig. 9);
Fig. 8 is a plan view of the peripheries of the ABS unit of the motorcycle according to the embodiment shown in Fig. 1;
Fig. 9 is a front view of the peripheries of the ABS unit of the motorcycle according to the embodiment shown in Fig. 1;
Fig. 10 is a perspective view of peripheries of a fixed fender and a movable fender of the motorcycle according to the embodiment shown in Fig. 1; and
Fig. 11 is a side view of the peripheries of the fixed fender and the movable fender of the motorcycle according to the embodiment shown in Fig. 1 as viewed from the other side (from the X2 direction in Fig. 9).

### DETAILED DESCRIPTION OF THE DRAWINGS

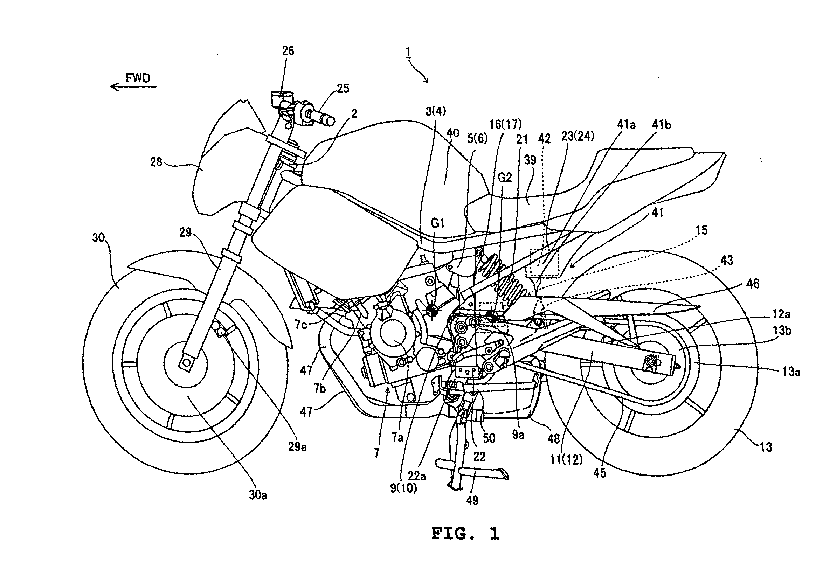

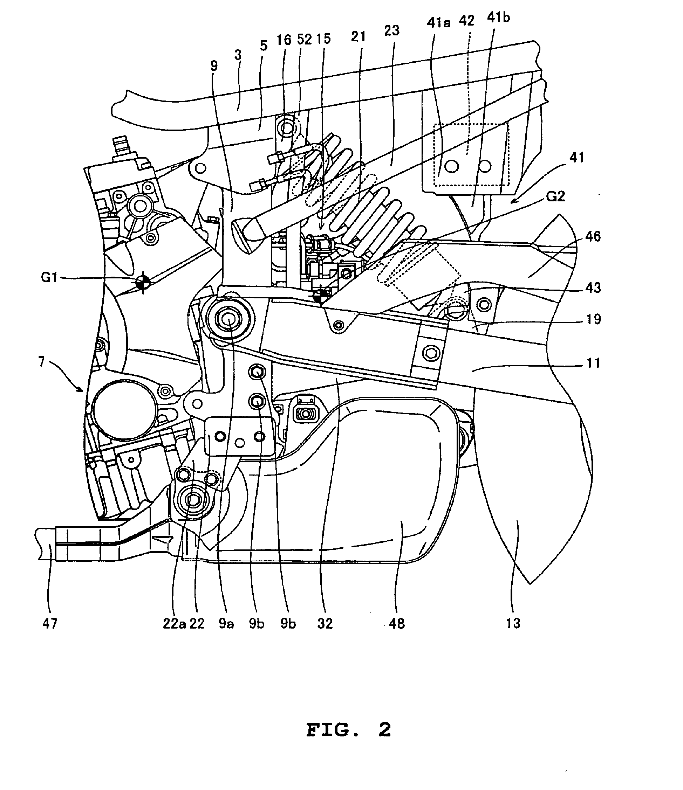

Fig. 1 is a side view showing the entire structure of a motorcycle according to an embodiment of the present invention. Figs. 2 to 11 are views for explaining the motorcycle of the embodiment shown in Fig. 1 in detail. In the embodiment, the motorcycle will be described as one example of a vehicle of the present invention. In the drawings, a forward direction is a traveling direction of the motorcycle. A structure of the motorcycle 1 according to the embodiment of the invention will be described in detail with reference to Figs. 1 to 11.

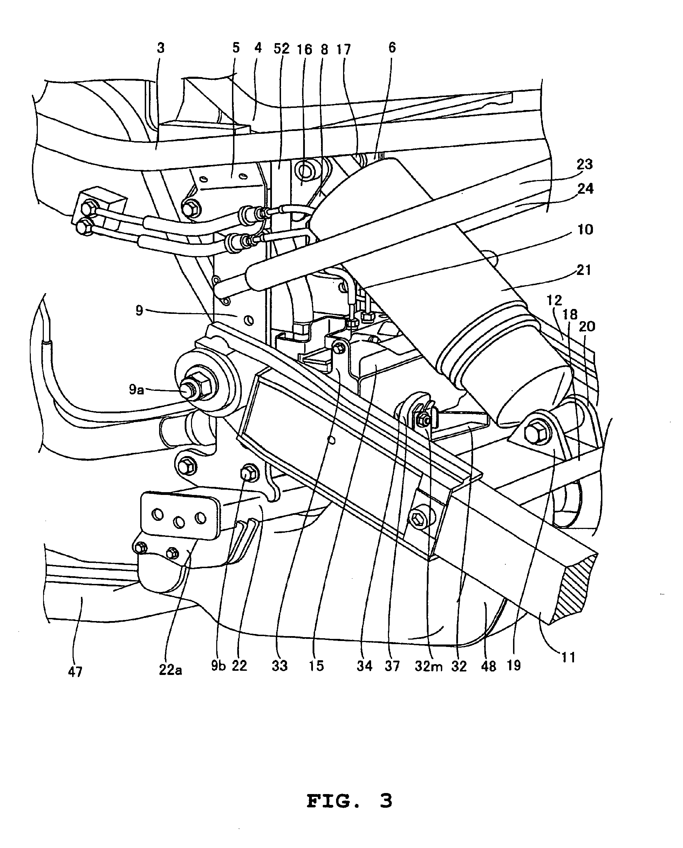

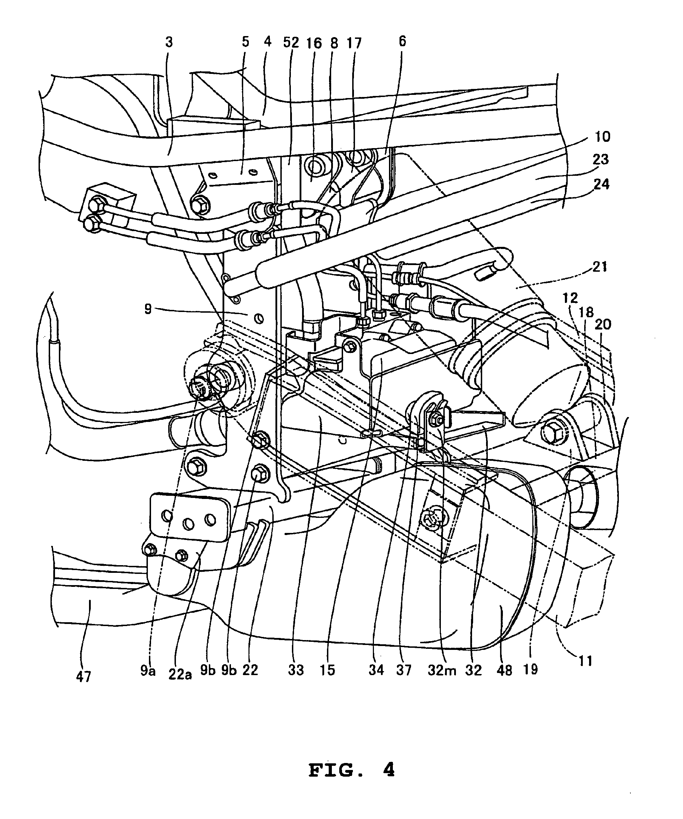

As shown in Fig. 1, in the motorcycle 1 of the embodiment of the invention, main frames 3 and 4 (see Figs. 3 and 4) extending in the front/rear direction are disposed behind a head pipe 2. Engine holding members 5 and 6 (see Figs. 3 and 4) are disposed below central portions of the main frames 3 and 4 in the front/rear direction, and an engine 7 is suspended from the engine holding members 5 and 6. As shown in Figs. 3 and 4, an upper portion connecting member 8 is provided to connect the engine holding members 5 and 6 to each other.

A pair of rear arm brackets 9 and 10 extending downward are welded to lower portions of both ends of the upper portion connecting member 8. The rear arm brackets 9 and 10 are one example of "brackets" of the present invention. As shown in Fig. 2, the rear arm bracket 9 is provided with a pivot shaft 9a which pivotally supports the rear arm 11 centered on the vicinity of the front end of the rear arm 11. The rear arm bracket 10 is provided with a pivot shaft (not shown) which supports the rear arm 12 such that the rear arm 12 can rock around its front end. As shown in Fig. 1, a rear wheel 13 is rotatably mounted in the vicinity of the rear end of each of the rear arms 11 and 12, and thereby the pair of rear arms 11 and 12 are provided on both sides of the motorcycle 1, and are provided behind the engine 7.

A rear disk rotor 13a is mounted on the rear wheel 13 such as to rotate together with the rear wheel 13. A rear caliper 12a is mounted on the rear arm 12 such as to sandwich the rear disk rotor 13a. The rear caliper 12a includes a pair of brake pads (not shown) provided such as to sandwich the rear disk rotor 13a, and a caliper piston (not shown).

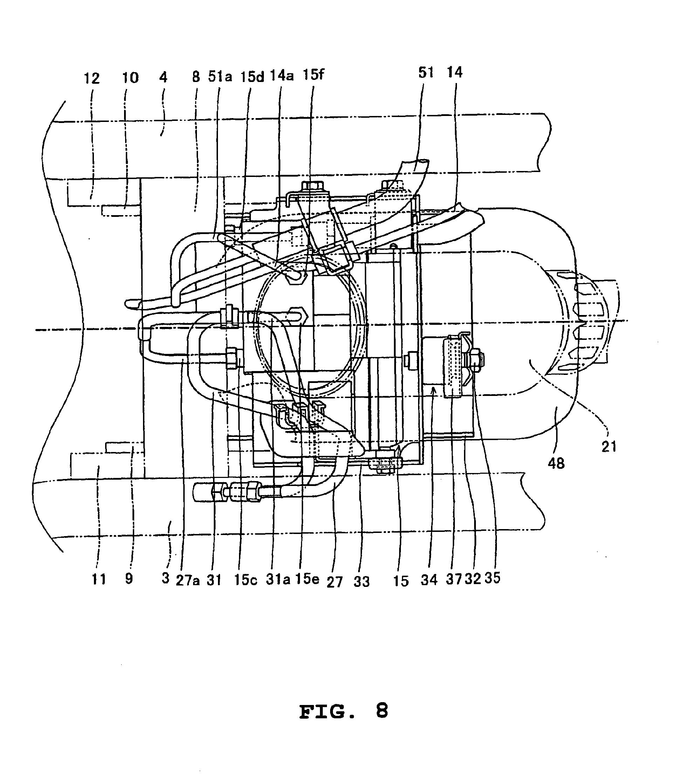

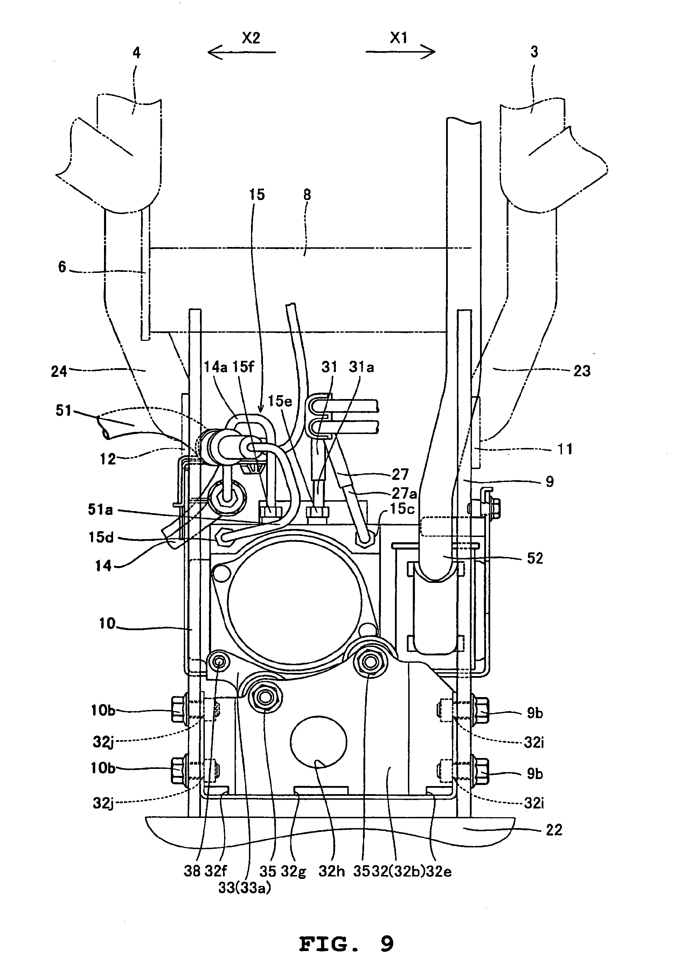

One end of an oil hose 14 (see Figs. 8 and 9) is connected to the caliper piston (not shown), and oil filled in the oil hose 14 is moved from the other end 14a (see Figs. 8 and 9) of the oil hose 14. The rear caliper 12a is connected to an ABS (Antilock Brake System) 15 unit. If a pressure of oil is applied to the caliper piston, a pair of brake pads (not shown) are pressed such that they approach each other. If the rear disk rotor 13a is sandwiched between the pair of brake pads, a braking force is applied to the rear wheel 13.

As shown in Figs. 3 and 4, a pair of suspension support members 16 and 17 are welded to an upper portion connecting member 8 in the vicinity of a central portion of the upper portion connecting member 8 in the vehicle width direction. The rear arms 11 and 12 are provided with a rear arm connecting member 18 which connects the rear arms 11 and 12 with each other. A pair of suspension support members 19 and 20 are welded to an upper portion of the rear arm connecting member 18.

In this embodiment, as shown in Fig. 2, a rear suspension 21 is disposed between the engine 7 and the rear wheel 13 such as to incline downward from the front side to the rear side of the vehicle. The rear suspension 21 is one example of a "suspension system". The rear suspension 21 has a function of damping a force in the expanding direction and the compressing direction when the rear wheel 13 and a later-described body frame move relative to each other. As shown in Figs. 3 and 4, an upper portion of the rear suspension 21 is supported by the pair of suspension support members 16 and 17, and a lower portion of the rear suspension 21 is supported by the pair of suspension support members 19 and 20. The rear suspension 21 is disposed between the main frames 3 and 4 and between the rear arms 11 and 12. As shown in Figs. 2 to 4, the rear suspension 21 is disposed above the ABS unit 15 as well as disposed such as to overlap with the ABS unit 15 as viewed from above as shown in Fig. 8, i.e., overlap in a width direction of the vehicle. The ABS unit 15 and the rear suspension 21 also overlap in a longitudinal direction of the vehicle

As shown in Figs. 3 and 4, a lower connecting member 22 extending in the vehicle width direction is mounted on the lower ends of the pair of rear arm brackets 9 and 10. A mounting member 22a for suspending a later-described chamber 48 is mounted on the lower connecting member 22.

As shown in Figs. 3 and 4, a backstay 23 is mounted between a rear portion of the main frame 3 and the rear arm bracket 9. A backstay 24 is mounted between a rear portion of the main frame 4 and the rear arm bracket 10. The body frame is constituted by the head pipe 2, the main frames 3 and 4, the upper portion connecting member 8, the rear arm brackets 9 and 10, the lower connecting member 22, the backstays 23 and 24 and the like.

As shown in Fig. 1, a steering handle 25 is pivotally mounted on an upper portion of the head pipe 2. A brake lever (not shown) is pivotally mounted on the steering handle 25. One end of an oil hose 27 (see Figs. 8 and 9) is connected to the brake lever through a master cylinder 26. That is, if a driver grasps the brake lever and pivots the same, the master cylinder 26 is operated, and oil filled in the oil hose 27 moves to the ABS unit 15 connected to the other end 27a (see Figs. 8 and 9) of the oil hose 27.

A headlamp 28 is provided on a front portion of the head pipe 2. A pair of front forks 29 having suspensions for absorbing vertical shocks are disposed below the head pipe 2. A front wheel 30 is rotatably mounted on lower ends of the pair of front forks 29.

A front disk rotor 30a is mounted on the front wheel 30 such as to rotate together with the front wheel 30. A front caliper 29a which sandwiches the front disk rotor 30a is mounted on the front fork 29. The front caliper 29a includes a pair of brake pads disposed such as to sandwich the front disk rotor 30a, and a caliper piston (not shown).

One end of an oil hose 31 (see Figs. 8 and 9) is connected to the caliper piston (not shown), and oil filled in the oil hose 31 moves from the other end 31 a (see Figs. 8 and 9) of the oil hose 31. That is, the front caliper 29a is connected to the ABS unit 15. Here, if a pressure of oil is applied to the caliper piston, the pair of brake pads are pressed such that they approach each other. The front disk rotor 30a is then sandwiched between the pair of brake pads, and thereby a braking force is applied to the front wheel 30.

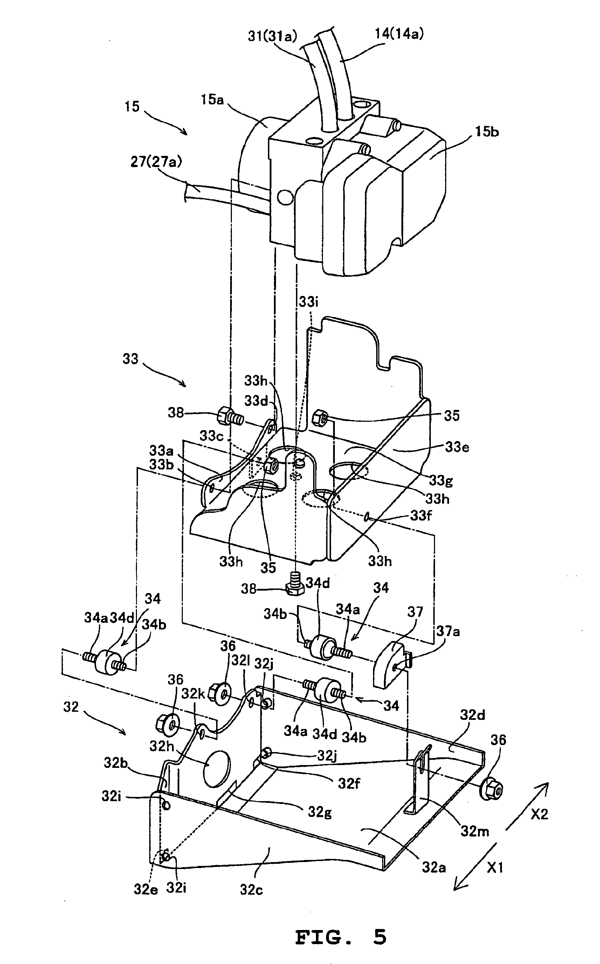

In this embodiment, as shown in Fig. 4, the ABS unit 15 is mounted on the rear arm brackets 9 and 10 through the lower housing 32 and the upper housing 33 below the rear suspension 21. The lower housing 32 and the upper housing 33 are one example of a "second housing" and a "first housing" of the present invention. More specifically, as shown in Fig. 9, in the vicinity of lower ends of the rear arm brackets 9 and 10, the lower housing 32 is fixed to the rear arm brackets 9 and 10 by screw members 9b and 10b. As shown in Fig. 5, the lower housing 32 includes a bottom surface 32a which inclines downward from the rear side to the front side of the vehicle, and four holes 32e, 32f, 32g and 32h formed on the front surface 32b from which foreign matters entering the lower housing 32 are discharged out. The holes 32e and 32f are formed on the side of the front surface 32b at a boundary between the bottom surface 32a and the front surface 32b in the vicinity of the side surfaces 32c and 32d, respectively. The hole 32g is formed on the side of the front surface 32b at the boundary between the bottom surface 32a and the front surface 32b substantially at a central portion of the front surface 32b in the vehicle width direction. The hole 32h is formed above the hole 32g on the front surface 32b.

A pair of screw inserting holes 32i are formed on the front region of the side surface 32c of the lower housing 32, and a pair of screw inserting holes 32j are formed on the front region of the side surface 32d. As shown in Fig. 9, these screw inserting holes 32i and 32j are provided for fixing the rear arm brackets 9 and 10 to the inner sides of the rear arm brackets 9 and 10 in the vehicle width direction by means of screw members 9b and 10b.

As shown in Fig. 5, screw inserting holes 32k and 32l are formed on the upper region of the front surface 32b. The screw inserting hole 32k is formed on the front surface 32b in the X1 direction of the vehicle width direction, and the screw inserting hole 32l is formed on the front surface 32b in the X2 direction of the vehicle width direction. A screw support portion 32m for supporting a later-described screw 34a extends upward near the rear end of the bottom surface 32a.

The upper housing 33 is disposed above the lower housing 32. Screw inserting holes 33b, 33c, and 33d are formed on the front surface 33a of the upper housing 33, and a screw inserting hole 33f is formed on the rear surface 33e. Four through holes 33h are formed on the bottom surface 33g of the upper housing 33, and a screw inserting hole 33i is formed at substantially central portion between the four through holes 33h. More specifically, the screw inserting hole 33b is formed on an upper region of the front surface 33a in the X1 direction of the vehicle width direction. The screw inserting hole 33c is formed on a lower region of the front surface 33a closer to the X2 direction than the center of the vehicle width direction. The screw inserting hole 33d is formed on the upper region of the front surface 33a closer to the X2 direction of the vehicle width direction. The screw inserting hole 33f is formed on the rear surface 33e slightly closer to the X1 direction than the center of the vehicle width direction.

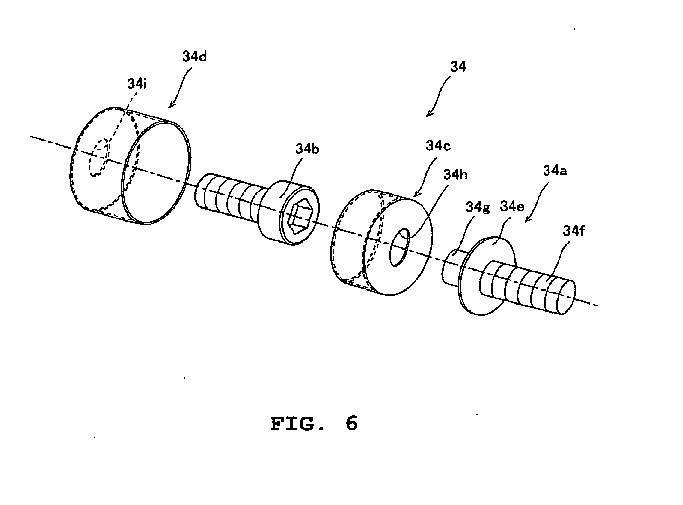

In this embodiment, the upper housing 33 and the lower housing 32 are fixed by means of a screw member 34, a nut 35 and a flanged nut 36. As shown in Fig. 6, the screw member 34 includes a metal screw 34a, a metal bolt 34b, a rubber member 34c and a metal member 34d. The screw member 34 and the rubber member 34c are one example of a "fixing member" and an "elastic member" of the present invention.

The metal screw 34a includes a brim 34e, a threaded shaft 34f and a shaft head 34g. The rubber member 34c includes a screw inserting hole 34h into which the shaft 34f of the screw 34a is inserted. When the shaft 34f of the screw 34a is inserted into the screw inserting hole 34h, the brim 34e of the screw 34a abuts against an outer surface of the rubber member 34c provided with the screw inserting hole 34h. The metal member 34d includes a screw inserting hole 34i into which a shaft of the bolt 34b is inserted. The rubber member 34c is fitted into the screw inserting hole 34i, and when the shaft of the bolt 34b is inserted into the screw inserting hole 34i, the head of the bolt 34b abuts against the interior of the screw inserting hole 34i.

As shown in Fig. 5, the bolts 34b and 34a of the screw member 34 disposed between the upper housing 33 and the lower housing 32 are respectively inserted into the screw inserting hole 33b of the upper housing 33 and the screw inserting hole 32k of the lower housing 32. The bolt 34b inserted into the screw inserting hole 33b of the upper housing 33 is threadedly engaged with a screw hole (not shown) of the ABS unit 15, and the upper housing 33 and the ABS unit 15 are fixed to each other. The screw 34a inserted into the screw inserting hole 32k of the lower housing 32 is fastened by the flanged nut 36. The upper housing 33 and the lower housing 32 are thereby fixed to each other at a predetermined distance through the rubber member 34c (see Fig. 6) of the screw member 34 at a portion between the screw inserting hole 33b of the upper housing 33 and the screw inserting hole 32k of the lower housing 32 such that the upper housing 33 and the lower housing 32 do not come into direct contact with each other.

The bolts 34b and 34a of the screw member 34 disposed between the upper housing 33 and the lower housing 32 are respectively inserted into the screw inserting hole 33c of the upper housing 33 and the screw inserting hole 32l of the lower housing 32. The bolt 34b inserted into the screw inserting hole 33c of the upper housing 33 is fastened by the nut 35, and the screw 34a inserted into the screw inserting hole 32l of the lower housing 32 is fastened by the flanged nut 36. The upper housing 33 and the lower housing 32 are thereby fixed to each other at a predetermined distance through the rubber member 34c (see Fig. 6) of the screw member 34 at a portion between the screw inserting hole 33c of the upper housing 33 and the screw inserting hole 32l of the lower housing 32 such that the upper housing 33 and the lower housing 32 do not come into direct contact with each other.

The bolt 34b of the screw member 34 disposed between the upper housing 33 and the lower housing 32 is inserted into the screw inserting hole 33f of the upper housing 33, and the screw 34a of the screw member 34 disposed between the upper housing 33 and the lower housing 32 is supported by the screw support portion 32m of the lower housing 32. The bolt 34b inserted into the screw inserting hole 33f of the upper housing 33 is fastened by the nut 35. A cap 37 for protecting the screw member 34 from foreign matter is provided between the screw support portion 32m and the brim 34e of the screw 34a. The cap 37 is provided with a screw inserting hole 37a into which the screw 34a is inserted. The screw 34a supported by the screw support portion 32m of the lower housing 32 through the cap 37 is fastened by the flanged nut 36. The upper housing 33 and the lower housing 32 are thereby fixed to each other at a predetermined distance through the rubber member 34c (see Fig. 6) of the screw member 34 at a portion between the screw inserting hole 33f of the upper housing 33 and the screw support portion 32m of the lower housing 32 such that the upper housing 33 and the lower housing 32 do not come into direct contact with each other.

In this embodiment, the ABS unit 15 is disposed above the upper housing 33. The ABS unit 15 is one example of the "brake control apparatus" of the present invention. The ABS unit 15 is fixed to the upper housing 33 by the bolt 34b inserted into the screw inserting hole 33b of the upper housing 33, a bolt 38 inserted into the screw inserting hole 33d of the upper housing 33 and a bolt 38 inserted into the screw inserting hole 33i of the upper housing 33. The ABS unit 15 is thereby mounted on the rear arm brackets 9 and 10 through the upper housing 33 and the lower housing 32.

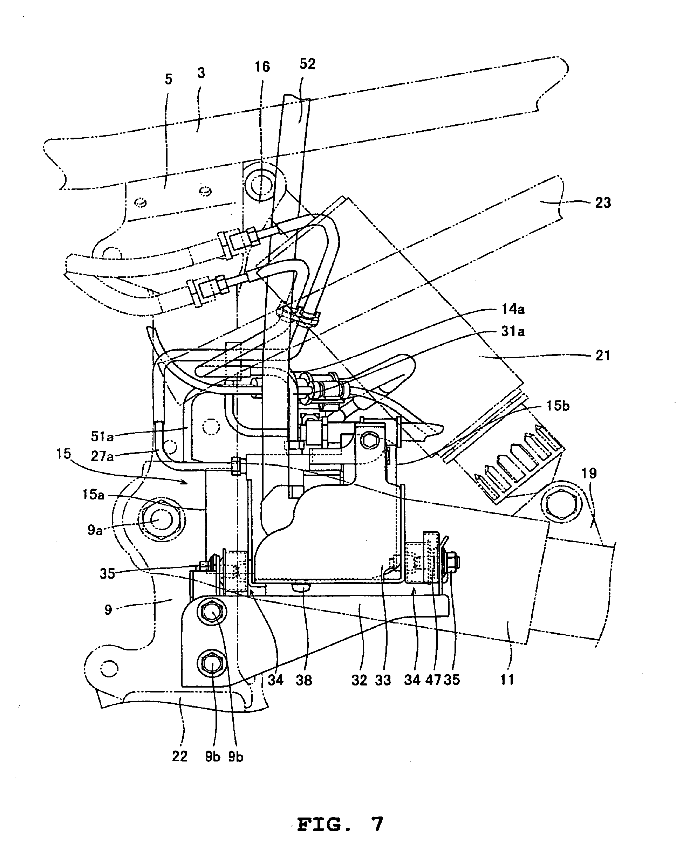

In this embodiment, as shown in Fig. 4, the ABS unit 15 is disposed between the rear arm 11 and the rear arm 12. As shown in Fig. 7, the ABS unit 15 is disposed such as to overlap with the rear arm 11 and the rear arm 12 (see Fig. 4) as viewed from side, i.e., overlap in the vertical direction of the vehicle. As shown in Figs. 3 and 4, the ABS unit 15 is disposed between the main frames 3 and 4, and between the rear arms 11 and 12. As shown in Fig. 8, the ABS unit 15 is disposed below the rear suspension 21 and above the chamber 48 such as to overlap with the rear suspension 21 and the chamber 48 as viewed from above, i.e., overlap in a width direction of the vehicle.

In this embodiment, the ABS unit 15 is disposed such that the center of the ABS unit 15 in the vehicle width direction is aligned with the center of the vehicle body. As shown in Figs. 1 and 2, the ABS center of gravity G2 of the ABS unit 15 is located lower than a vehicle center of gravity G1 existing in the vicinity of the engine 7. The ABS center of gravity G2 is one example of the "center of gravity of the brake control apparatus" of the present invention. Since the ABS unit 15 is disposed in a vacant space below the rear suspension 21, it is possible to lower the height of a later-described seat 39 as compared with a case where the ABS unit 15 is disposed above the rear suspension 21.

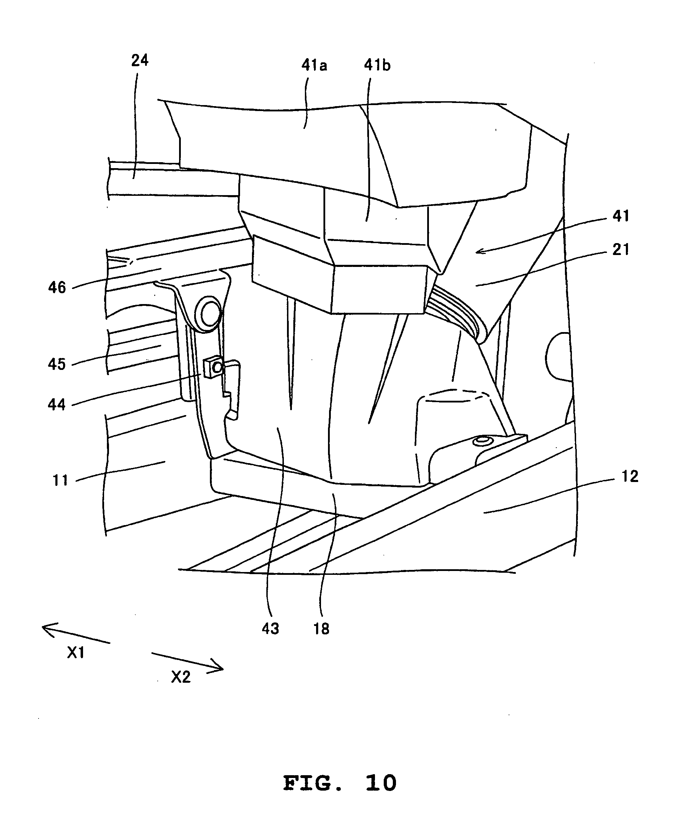

As shown in Fig. 1, a seat 39 is disposed on rear upper portions of the main frames 3 and 4. A fuel tank 40 is disposed in front of the seat 39. As shown in Fig. 2, a fixed rear fender 41 is disposed below the seat 39 in order to prevent foreign matter such as mud splashed by the rear wheel 13 from adhering to the rear suspension 21 and the ABS unit 15. A battery 42 is accommodated in an upper portion 41 a of the fixed rear fender 41. As shown in Fig. 10, a lower portion 41 b of the fixed rear fender 41 has a V-shape projecting rearward from both side surfaces in the vehicle width direction toward the central portion.

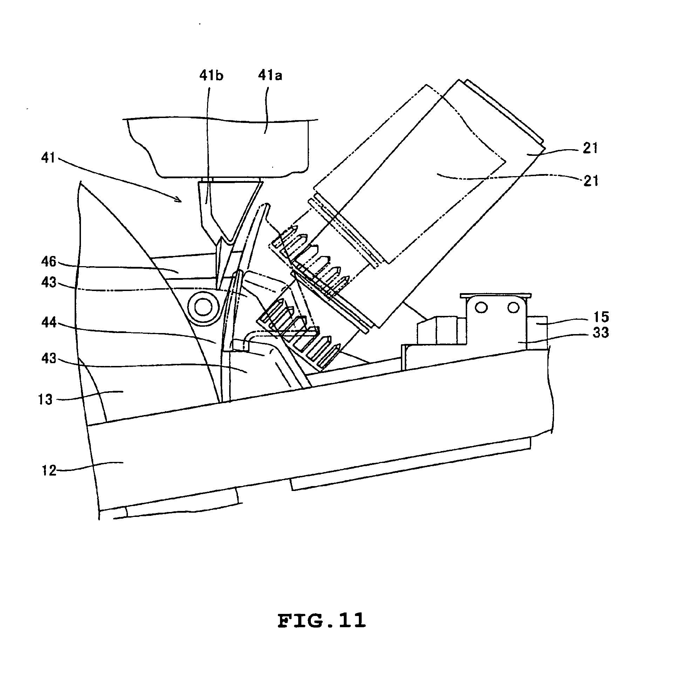

A movable rear fender 43 is provided below the fixed rear fender 41. The movable rear fender 43 is mounted on a stay 44 extending in the vertical direction of the body frame in the X1 direction of the vehicle width direction. The lower portion of the stay 44 is fixed to the rear arm connecting member 18. The movable rear fender 43 is fixed to the rear arm connecting member 18 in the X2 direction of the vehicle width direction. As shown in Fig. 11, the movable rear fender 43 can thereby swing as the rear arms 11 and 12 swing. The fixed rear fender 41 and the movable rear fender 43 always overlap as viewed from behind the vehicle irrespective of the swinging position of the movable rear fender 43. It is thereby possible to prevent foreign matter such as mud splashed by the rear wheel 13 from adhering to the rear suspension 21 or the ABS unit 15 irrespective of the rocking positions of the rear arms 11 and 12.

As shown in Figs. 1 and 2, the engine 7 is disposed below the main frame 3. An upper portion of the engine 7 is suspended by the engine holding members 5 and 6, and the lower portion of the engine 7 is supported by the rear arm brackets 9 and 10. The engine 7 is a parallel four-cylinder engine having four cylinders (not shown) arranged in the vehicle width direction. More specifically, as shown in Fig. 1, the engine 7 includes a crankcase 7a provided with a crankshaft (not shown) therein extending in the vehicle width direction, a cylinder portion 7b extending upward and forward from an upper portion of the crankcase 7a, the cylinder portion 7b having four cylinders (not shown) arranged in the vehicle width direction thereof, and a cylinder head 7c disposed in the upper portion of the cylinder portion 7b.

In this embodiment, the vehicle center of gravity G1 exists in the vicinity of the engine 7 as shown in Figs. 1 and 2.

As shown in Fig. 1, a drive chain 45 for transmitting a drive force generated in the engine 7 to the rear wheel 13 is lead out from a rear portion of the crankcase 7a. The drive chain 45 is lead out such as to extend rearward, and the drive chain 45 meshes with a driven sprocket 13b provided on the rear wheel 13. A drive chain cover 46 is provided above the drive chain 45. As shown in Fig. 10, the drive chain cover 46 is fixed to an upper portion of the stay 44 on which the movable rear fender 43 is mounted, and the drive chain cover 46 is fixed to two points (not shown) of the rear arm 11. As a result, the drive chain cover 46 can rock when the rear arm 11 and the movable rear fender 43 rock.

As shown in Fig. 1, one side of an exhaust pipe 47 through which exhaust gas is discharged is mounted on a front side of the cylinder head 7c. The exhaust pipe 47 extends downward from a front side of the cylinder head 7c, curves rearward and extends toward a rear lower portion of the engine 7. The other side of the exhaust pipe 47 is connected to the chamber 48. As shown in Figs. 2 to 4, the chamber 48 is suspended by the mounting member 22a of the lower connecting member 22, and has a function of reducing exhaust sound.

In this embodiment, as shown in Figs. 3 and 4, the chamber 48 is disposed between the engine 7 and the rear wheel 13, and is disposed such as to overlap with a lower portion of the ABS unit 15 as viewed from above as shown in Fig. 8, i.e., overlap in a width direction of the vehicle. The chamber 48 and the ABS unit 15 also overlap in a longitudinal direction of the vehicle.

As shown in Fig. 1, a main stand 49 which supports the vehicle body when the vehicle stops is pivotally provided on both sides of the chamber 48 in the vehicle width direction. A side stand 50 is pivotally mounted on the mounting member 22a of the lower connecting member 22 for supporting the vehicle body in its inclined state.

A brake pedal (not shown) is turnably disposed on the side of the X2 direction of the chamber 48 in the vehicle width direction (see Fig. 9). One end of an oil hose 51 (see Figs. 8 and 9) is connected to the brake pedal through a master cylinder (not shown). That is, if a driver depresses the brake pedal and turns the same, the master cylinder is operated, and oil filled in the oil hose 51 moves to the ABS unit 15 connected to the other end 51 a (see Figs. 8 and 9) of the oil hose 51.

The ABS unit 15 will be now described in detail.

As shown in Fig. 5, the ABS unit 15 includes a hydraulic unit 15a accommodated in a metal housing, and an ECU (Engine Control Unit) 15b accommodated in a resin housing. As shown in Fig. 8, the ABS unit 15 is provided on its front side with a hose connecting portion 15c connected to the other end 27a of the oil hose 27, and a hose connecting portion 15d connected to the other end 51 a of the oil hose 51. The ABS unit 15 is provided at its upper surface with a hose connecting portion 15e connected to the other end 31 a of the oil hose 31, and a hose connecting portion 15f connected to the other end 14a of the oil hose 14. As shown in Fig. 9, a harness 52 extending upward is connected to the X1 direction side of the front surface of the ABS unit 15 in the vehicle width direction.

The ABS unit 15 is constituted such that oil in the master cylinder 26 on the side of the brake lever, and oil in the master cylinder (not shown) on the side of the brake pedal are not accumulated in the hydraulic unit 15a at the normal state. That is, oil which moved to the other end 27a of the oil hose 27 through the master cylinder 26 on the side of the brake lever moves to a caliper piston (not shown) of the front caliper 29a from the other end 31 a of the oil hose 31 as it is. Oil which moved to the other end 51 a of the oil hose 51 through the master cylinder (not shown) on the side of the brake pedal moves to the caliper piston (not shown) of the rear caliper 12a from the other end 14a of the oil hose 14 as it is. The braking force is thereby applied to the front wheel 30 and the rear wheel 13.

At the time of hard braking by a driver, an acceleration sensor (not shown) senses the abnormality. An electric signal sent from the acceleration sensor is transmitted to the ECU 15b of the ABS unit 15 through the harness 52. Oil from the master cylinder 26 on the side of the brake lever and oil from the master cylinder (not shown) on the side of the brake pedal are thereby accumulated in the hydraulic unit 15a of the ABS unit 15. That is, since oil which moved to the other end 27a of the oil hose 27 through the master cylinder 26 on the side of the brake lever is accumulated in the hydraulic unit 15a, the oil does not move to the caliper piston (not shown) of the front caliper 29a from the other end 31a of the oil hose 31. Further, since oil which moved to the other end 51 a of the oil hose 51 through the master cylinder (not shown) on the side of the brake pedal is accumulated in the hydraulic unit 15a in the similar manner, this oil does not move to the caliper piston (not shown) of the rear caliper 12a from the other end 14a of the oil hose 14. Excessive braking force is thereby prevented from being applied to the front wheel 30 or the rear wheel 13. As a result, the ABS unit 15 controls the braking force applied to the front wheel 30 and the rear wheel 13, and prevents the front wheel 30 and the rear wheel 13 from being locked.

In this embodiment, the ABS unit 15 is disposed such that a portion thereof is disposed such as to overlap with the rear arms 11 and 12 as viewed from the side, i.e., overlap in a vertical direction of the vehicle. The center of gravity G1 of the motorcycle 1 is thereby positioned at a lower portion as compared with a case where the ABS unit 15 is disposed above the rear arms 11 and 12. This configuration enables a driver to easily correct the inclination of the motorcycle, and therefore to prevent the operability of the motorcycle 1 from being deteriorated.

In this embodiment, the ABS unit 15 is disposed below the rear suspension 21, and a portion of the ABS unit 15 is disposed such as to overlap with the rear suspension 21 as viewed from above, i.e., overlap in a width direction of the vehicle. The rear suspension 21 and the ABS unit 15 can be disposed within a shorter length in the vehicle width direction as compared with a case where the rear suspension 21 and the ABS unit 15 are disposed on both sides in the vehicle width direction. It is consequently possible to prevent the vehicle width from increasing. This can prevent a rider from having trouble touching his feet to the ground due to the increase in the vehicle width. Further, since the ABS unit 15 can be disposed below the rear suspension 21, the vehicle center of gravity G1 can be lowered as compared with a case where the ABS unit 15 is disposed above the rear suspension 21. This can further enhance the operability of the motorcycle 1.

In this embodiment, the ABS unit 15 is disposed between the pair of rear arms 11 and 12, as described above. Therefore, balance of the motorcycle 1 in the vehicle width direction is not deteriorated unlike the case where the ABS unit 15 is disposed outside the rear arms 11 and 12. Therefore, the operability of the motorcycle 1 can be further enhanced. The rear arms 11 and 12 can prevent foreign matter such as mud from adhering to the ABS unit 15 from both sides of the motorcycle 1.

In this embodiment, the ABS unit 15 is disposed such that the center thereof in the vehicle width direction becomes substantially aligned with the center of the motorcycle 1 in the vehicle width direction. The ABS unit 15 can be thereby disposed without being deviated to either side of the motorcycle 1 in the vehicle width direction. Therefore, the balance of the motorcycle 1 in the vehicle width direction can be prevented from being deteriorated. This can further enhance the operability of the motorcycle 1.

In this embodiment, the ABS unit 15 is mounted on the pair of rear arm brackets 9 and 10 on which the rear arms 11 and 12 are pivotally mounted. Therefore, the ABS unit 15 is not connected directly to the rear arms 11 and 12. The ABS unit 15 can be consequently fixed between the rear arms 11 and 12 so as not to be affected by the swing of the rear arms 11 and 12. This can prevent the balance of the motorcycle 1 from being deteriorated due the swing of the ABS unit 15. Therefore, the operability of the motorcycle 1 can be further enhanced.

In this embodiment, the ABS unit 15 is mounted on the rear arm brackets 9 and 10 through the upper housing 33 which supports the ABS unit 15 from below and the lower housing 32 which supports the upper housing 33 from below. This can prevent heat from the engine 7 or chamber 48 and vibration transmitted directly from the rear arm brackets 9 and 10 from being transmitted to the ABS unit 15. Further, this can also prevent foreign matter such as mud splashed by the rear wheel 13 from adhering to the ABS unit 15.

In this embodiment, the upper housing 33 and the lower housing 32 are disposed at the predetermined distance from each other through the screw member 34, as described above. This can prevent heat from the engine 7 or the exhaust pipe 47 and vibration transmitted directly from the rear arm brackets 9 and 10 from being transmitted to the ABS unit 15.

In this embodiment, the upper housing 33 and the lower housing 32 are disposed at the predetermined distance from each other through the rubber member 34c as described above. This can prevent vibration transmitted directly from the rear arm brackets 9 and 10 from being transmitted to the ABS unit 15.

Further, in this embodiment, the lower housing 32 includes the bottom surface 32a inclining forward and downward of the vehicle from the rear side of the vehicle, and the holes 32e to 32h formed on the front surface 32b. Foreign matter splashed by the rear wheel 13 can thereby move from the rear side of the vehicle body toward the front surface 32b along the bottom surface 32a which inclines downward, and the foreign matter can be discharged outside from the lower housing 32 through the holes 32e to 32h formed on the front surface 32b. This can prevent foreign matter from being accumulated in the lower housing 32.

Further, in this embodiment, the ABS unit 15 is disposed above the chamber 48 and is disposed such that the ABS unit 15 is disposed such as to overlap with the chamber 48 as viewed from above, i.e., overlap in a width direction of the vehicle. Not only the rear suspension 21 and the ABS unit 15, but also the chamber 48 and the ABS unit 15 can be thereby disposed within a shorter length in the vehicle width direction. Therefore, it is possible to prevent the vehicle width from increasing. This can prevent a rider from having trouble touching his feet to the ground due to the increase in the vehicle width.

Further, in this embodiment, the ABS center of gravity G2 in the vertical direction of the ABS unit 15 is located below the vehicle center of gravity G1. This makes it easier for a rider to correct the inclination of the motorcycle 1 when the motorcycle 1 is inclined, as compared with a case where the ABS center of gravity G2 is located higher than the vehicle center of gravity G1. Therefore, the operability of the motorcycle 1 can be further enhanced.

The specific embodiment disclosed herein is for exemplification purpose only and the present invention should not be limited to that embodiment. The scope of the present invention is indicated by the Claims.

For example, the motorcycle is shown as one example of a vehicle having the ABS unit as the brake control apparatus of the present invention and the rear suspension as the suspension system of the present invention in the embodiment. However, the present invention should not be limited to this, but the present invention can also be applied to other vehicles such as a tricycle if the vehicle has the brake control apparatus and the suspension system.

Although the vehicle including the pair of rear arms is shown in the above embodiment, the present invention is not limited to this, but the vehicle may include one rear arm.

Although the vehicle has one rear suspension in this embodiment, the present invention is not limited to this, but the vehicle may include two or more rear suspensions.

The ABS unit is mounted on the pair of rear arm brackets through the upper housing and the lower housing in the embodiment. However, the present invention is not limited to this, but the brake control apparatus may be mounted directly on the bracket such as the rear arm bracket without being mounted through the housing. Further, the brake control apparatus may not be mounted on the bracket but on the main frame constituting the body frame.

Although the rear arm bracket and the main frame are provided as separated members in this embodiment, the present invention is not limited to this, but the rear arm bracket and the main frame may be integrally provided.

Although the lower housing and the pair of rear arm brackets are fixed to each other in this embodiment, the present invention is not limited to this, but the upper housing and the pair of rear arm brackets may be fixed to each other.

Although the rear arm is pivotally supported by the pivot shaft in this embodiment, the present invention is not limited to this, but the rear arm can be pivotally supported by the engine.

### Description of Reference Numerals

- 1: Motorcycle (Vehicle)
- 7: Engine
- 9, 10: Rear arm bracket (Bracket)
- 11, 12: Rear arm
- 13: Rear wheel
- 15: ABS unit (Brake control apparatus)
- 21: Rear suspension (Suspension system)
- 32: Lower housing (Second housing)
- 32e, 32f, 32g, 32h: Hole
- 33: Upper housing (First housing)
- 34: Screw member (Fixing member)
- 34c: Rubber member (Elastic member)
- 47: Exhaust pipe
- 48: Chamber
- G1: Vehicle center of gravity
- G2: ABS center of gravity (Center of gravity of brake control apparatus)

## Claims

1. A vehicle (1) comprising:
an engine (7);
a rear wheel (13) which is rotated by a drive force from the engine (7);
a pair of rear arms (11, 12) disposed behind the engine (7) for rotatably supporting the rear wheel (13);
a brake control apparatus (15) configured to control a braking force applied to the rear wheel (13) and prevent the rear wheel (13) from being locked, at least a portion of the brake control apparatus (15) being disposed such as to overlap with the rear arm (11, 12) in a side view of the vehicle;
a body frame; and
a suspension system (21) disposed between the body frame and the rear arm (11, 12); wherein
the brake control apparatus (15) is disposed below the suspension system (21), and at least a portion of the brake control apparatus (15) is disposed such as to overlap with the suspension system (21) in a plan view of the vehicle; and
the rear arms (11, 12) are provided side by side in a vehicle width direction, wherein the brake control apparatus (15) is mounted on the body frame between the pair of rear arms (11, 12).

2. The vehicle (1) according to claim 1, wherein the brake control apparatus (15) is disposed such that a center thereof in a vehicle width direction is substantially aligned with a center of the vehicle in the vehicle width direction.

3. The vehicle (1) according to any preceding claim, wherein the body frame comprises a pair of rear arm brackets (9, 10), wherein the pair of brackets (9, 10) is provided with a pivot shaft (9a) which pivotally supports the rear arms (11, 12) centred in the vicinity of the front end of respective rear arms (11, 12) and the rear arm brackets (9, 10) are disposed such as to extend in a vertical direction, wherein the brake control apparatus (15) is mounted on the brackets.

4. The vehicle (1) according to any preceding claim, further comprising a body frame, wherein
the brake control apparatus (15) is mounted on the body frame through a first housing (33) which supports the brake control apparatus (15) from below and a second housing (32) which supports the first housing (33) from below.

5. The vehicle (1) according to claim 4, wherein the first housing (33) and the second housing (32) are disposed at a predetermined distance from each other through a fixing member (34).

6. The vehicle (1) according to claim 5, wherein the fixing member (34) comprises an elastic member (34c).

7. The vehicle (1) according to claim 4, 5 or 6, wherein the second housing (32) includes a bottom surface which inclines downward from a rear side of the vehicle toward a front side of the vehicle, and a hole (32g) formed on a front surface of the second housing (32).

8. The vehicle (1) according to any preceding claim, further comprising a chamber (48) which is connected to the engine (7) through an exhaust pipe (47) to reduce exhaust sound, wherein the brake control apparatus (15) is disposed above the chamber (48), and is disposed such as to overlap with the chamber (48) in the plan view of the vehicle.

9. The vehicle (1) according to any preceding claim, wherein a center of gravity (G2) of the brake control apparatus (15) is located lower than a center of gravity (G1) of the vehicle.

## Patentansprüche

1. Fahrzeug (1), das aufweist:
einen Motor (7);
ein Hinterrad (13), das mittels einer Antriebskraft vom Motor (7) gedreht wird;
ein Paar hintere Arme (11, 12), die hinter dem Motor (7) für das drehbare Aufnehmen des Hinterrades (13) angeordnet sind;
eine Bremssteuervorrichtung (15), die ausgebildet ist, um eine am Hinterrad (13) angewandte Bremskraft zu steuern, und um zu verhindern, dass das Hinterrad (13) blockiert wird, wobei mindestens ein Teil der Bremssteuervorrichtung (15) so angeordnet ist, dass er sich mit dem hinteren Arm (11, 12) in einer Seitenansicht des Fahrzeuges überdeckt;
ein Karosseriegerippe; und
ein Aufhängungssystem (21), das zwischen dem Karosseriegerippe und dem hinteren Arm (11, 12) angeordnet ist; wobei
die Bremssteuervorrichtung (15) unterhalb des Aufhängungssystems (21) angeordnet ist, und wobei mindestens ein Teil der Bremssteuervorrichtung (15) so angeordnet ist, dass er sich mit dem Aufhängungssystem (21) in einer Draufsicht des Fahrzeuges überdeckt; und
die hinteren Arme (11, 12) nebeneinander liegend in einer Breitenrichtung des Fahrzeuges vorhanden sind, wobei die Bremssteuervorrichtung (15) am Karosseriegerippe zwischen dem Paar der hinteren Arme (11, 12) montiert ist.

2. Fahrzeug (1) nach Anspruch 1, bei dem die Bremssteuervorrichtung (15) so angeordnet ist, dass eine Mitte davon in einer Breitenrichtung des Fahrzeuges im Wesentlichen mit einer Mitte des Fahrzeuges in der Breitenrichtung des Fahrzeuges ausgerichtet ist.

3. Fahrzeug (1) nach einem der vorhergehenden Ansprüche, bei dem das Karosseriegerippe ein Paar hintere Armhalterungen (9, 10) aufweist, wobei das Paar der Halterungen (9, 10) mit einer Drehwelle (9a) versehen ist, die drehbar die hinteren Arme (11, 12) trägt, zentriert in der Nähe des vorderen Endes der jeweiligen hinteren Arme (11, 12), und wobei die hinteren Armhalterungen (9, 10) so angeordnet sind, dass sie sich in einer vertikalen Richtung erstrecken, wobei die Bremssteuervorrichtung (15) an den Halterungen montiert ist.

4. Fahrzeug (1) nach einem der vorhergehenden Ansprüche, das außerdem ein Karosseriegerippe aufweist, bei dem
die Bremssteuervorrichtung (15) am Karosseriegerippe mittels eines ersten Gehäuses (33), das die Bremssteuervorrichtung (15) von unten stützt, und eines zweiten Gehäuses (32) montiert ist, das das erste Gehäuse (33) von unten stützt.

5. Fahrzeug (1) nach Anspruch 4, bei dem das erste Gehäuse (33) und das zweite Gehäuse (32) mit einem vorgegebenen Abstand voneinander mittels eines Befestigungselementes (34) angeordnet sind.

6. Fahrzeug (1) nach Anspruch 5, bei dem das Befestigungselement (34) ein elastisches Element (34c) aufweist.

7. Fahrzeug (1) nach Anspruch 4, 5 oder 6, bei dem das zweite Gehäuse (32) eine Bodenfläche, die sich nach unten von einer hinteren Seite des Fahrzeuges in Richtung einer vorderen Seite des Fahrzeuges neigt, und ein Loch (32g) umfasst, das in einer vorderen Fläche des zweiten Gehäuses (32) gebildet wird.

8. Fahrzeug (1) nach einem der vorhergehenden Ansprüche, das außerdem eine Kammer (48) aufweist, die mit dem Motor (7) durch ein Auspuffrohr (47) verbunden ist, um das Auslassgeräusch zu verringern, wobei die Bremssteuervorrichtung (15) über der Kammer (48) angeordnet ist, und wobei sie so angeordnet ist, dass sie sich mit der Kammer (48) in der Draufsicht des Fahrzeuges überdeckt.

9. Fahrzeug (1) nach einem der vorhergehenden Ansprüche, bei dem ein Schwerpunkt (G2) der Bremssteuervorrichtung (15) niedriger als ein Schwerpunkt (G1) des Fahrzeuges angeordnet ist.

## Revendications

1. Véhicule (1), comprenant:
un moteur (7) ;
une roue arrière (13), mise en rotation par une force d'entraînement du moteur (7);
une paire de bras arrière (11, 12), agencée dernière le moteur (7) pour supporter de manière rotative la roue arrière (13);
un dispositif de commande de frein (15), configuré de manière à contrôler une force de freinage appliquée à la roue arrière (13) et à empêcher un blocage de la roue arrière (13), au moins une partie du dispositif de commande de frein (15) étant agencée de sorte à chevaucher le bras arrière (11, 12) dans une vue latérale du véhicule ;
une ossature de carrosserie ; et
un système de suspension (21), agencé entre l'ossature de carrosserie et le bras arrière (11, 12) ; dans lequel
le dispositif de commande de frein (15) est agencé au-dessous du système de suspension (21), au moins une partie du dispositif de commande de frein (25) étant agencée de sorte à chevaucher le système de suspension (21) dans une vue en plan du véhicule ; et
les bras arrière (11, 12) sont agencés côte à côte dans une direction de la largeur du véhicule, le dispositif de commande de frein (15) étant monté sur l'ossature de carrosserie entre la paire de bras arrière (11, 12).

2. Véhicule (1) selon la revendication 1, dans lequel le dispositif de commande de frein (15) est agencé de sorte que son centre, dans une direction de la largeur du véhicule, est pour l'essentiel aligné avec un centre du véhicule dans la direction de la largeur du véhicule.

3. Véhicule (1) selon l'une quelconque des revendications précédentes, dans lequel l'ossature de carrosserie comprend une paire de consoles de bras arrière (9, 10), la paire de consoles (9, 10) comportant un arbre de pivot (9a), supportant de manière pivotante les bras arrière (11, 12), centré au voisinage de l'extrémité avant des bras arrière respectifs (11, 12), les consoles des bras arrière (9, 10) étant agencées de sorte à s'étendre dans une direction verticale, le dispositif de commande de frein (15) étant monté sur les consoles.

4. Véhicule (1) selon l'une quelconque des revendications précédentes, comprenant en outre une ossature de carrosserie, dans lequel :
le dispositif de commande de frein (15) est monté sur l'ossature de carrosserie à travers un premier boîtier (33) qui supporte le dispositif de commande de frein (15) d'en bas, et un deuxième boîtier (32) qui supporte le premier boîtier (33) d'en bas.

5. Véhicule (1) selon la revendication 4, dans lequel le premier boîtier (33) et le deuxième boîtier (32) sont agencés à une distance prédéterminée l'un de l'autre, par l'intermédiaire d'un élément de fixation (34).

6. Véhicule (1) selon la revendication 5, dans lequel l'élément de fixation (34) comprend un élément élastique (34c).

7. Véhicule (1) selon les revendications 4, 5 ou 6, dans lequel le deuxième boîtier (32) englobe une surface inférieure inclinée vers le bas, d'un côté arrière du véhicule vers un côté avant du véhicule, un trou (32g) étant formé sur une surface avant du deuxième boîtier (32).

8. Véhicule (1) selon l'une quelconque des revendications précédentes, comprenant en outre une chambre (48) connectée au moteur (7) par un tuyau d'échappement (47), pour réduire les bruits d'échappement, le dispositif de commande de frein (15) étant agencé au-dessus de la chambre (48) et étant agencé de sorte à chevaucher la chambre (48) dans la vue en plan du véhicule.

9. Véhicule (1) selon l'une quelconque des revendications précédentes, dans lequel un centre de gravité (G2) du dispositif de commande de frein (15) est situé à un niveau plus bas qu'un centre de gravité (G1) du véhicule.
